(19) Europäisches Patentamt
European Patent Office
Office européen des brevets

(11) **EP 4 787 658 A1**

(12) **EUROPEAN PATENT APPLICATION**

(43) Date of publication:
**05.08.2026 Bulletin 2026/32**

(21) Application number: **26155680.7**

(22) Date of filing: **02.02.2026**

(51) International Patent Classification (IPC):
**H02J 3/388** (2026.01)     **H02J 3/38** (2026.01)

(52) Cooperative Patent Classification (CPC):
**H02J 3/388;** H02J 3/381

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.02.2025 US 202519044255**

(71) Applicant: **sonnen GmbH
87499 Wildpoldsried (DE)**

(72) Inventor: **Restrepo-Zambrano, Jose
GA 30005 Alpharetta (US)**

(54) **ISLANDING DETECTION METHOD FOR AN INVERTER-BASED DISTRIBUTED ENERGY RESOURCE, IBDER**

(57)     An islanding detection method for an inverter-based distributed energy resource, IBDER, designed for connection to a power grid having a predetermined nominal harmonic grid voltage with a pre-determined nominal grid frequency, the method comprising:
injecting a periodic perturbation in the output voltage or current of the IBDER;
measuring a signal representing a physical quantity occurring at the IBDER as a result of the perturbation;
analyzing the signal to derive at least one physical quantity from it; and
comparing the or each physical quantity to a respective corresponding pre-determined reference quantity related to a non-islanding condition of the IBDER to determine whether an islanding condition exists for the IBDER; wherein the periodic perturbation comprises at least one sub-harmonic perturbation and deriving the at least one physical quantity from the signal comprises recovering a sub-harmonic component that is represented by the signal as a result of the sub-harmonic perturbation.

Fig. 2

**Description**

FIELD OF THE INVENTION

The present invention relates to islanding detection for an inverter-based distributed energy resource, IBDER. Specifically, it relates to an Islanding detection method and to an Inverter being configured to apply the method to detect an islanding condition.

BACKGROUND OF THE INVENTION

Distributed energy resources (DER) are compact energy systems that provide power to nearby locations. These systems can either be integrated into the electric grid or operate independently, supplying energy to specific sites or functions. DER encompasses both energy generation technologies and energy storage solutions. When energy is generated through these resources, it is known as distributed generation. DER systems utilize a range of energy sources, but they are commonly linked to renewable energy technologies, such as rooftop solar panels and small wind turbines.

A specific form of DER is one which uses an inverter to convert electrical energy from one form to another, e.g., from DC to AC. For example, grid-connected photovoltaic systems typically have an inverter for converting a DC voltage (or current) generated by a solar generator, such as a set of rooftop solar panels, to an AC voltage (current) in order to provide the generated electricity in a form which is compatible with the power grid to which the DER is connected. Similarly, DC-based energy storage systems, such as batteries, may have an inverter for the same purpose. DER having an inverter are herein referred to as inverter-based distributed energy resources, or in short "IBDER".

IBDER can thus provide electrical energy which can be fed into the power grid, such as a public power grid. For example, photovoltaic ("PV") systems convert sunlight into electrical energy. Another example is energy storage systems, such as batteries, which are capable of storing energy, e.g. electrical energy, and feed it back into the power grid, when there is a request for it. A typical PV system comprises a solar generator with several solar panels, a mounting system, and an inverter. The inverter converts the DC power generated by the solar panels into AC power, which is then fed into the grid through a grid connection point. The grid connection point is usually a dedicated metering point, where the energy produced by the PV system is measured and recorded.

To ensure safe and efficient integration with the grid, IBDER must typically meet several specific requirements. While such requirements are often country-specific or use-case specific, IBDER connected to a power typically must meet one or more of the following requirements:

Grid Synchronization: The inverter must synchronize its output frequency and voltage with the grid's frequency and voltage. This is typically achieved through a phase-locked loop (PLL) control system.

Voltage and Frequency Range: The inverter must operate within a specified voltage and frequency range, which is usually defined by the grid operator. For example, in the US, the inverter must operate within a voltage range of 92 - 110% of the nominal grid voltage (e.g., 120V) and a frequency range of 59.3 - 60.5 Hz. In Germany, where the public power grid is a nominal 230V/50 Hz-grid, the inverter must operate within a voltage range of 90 - 110% of the nominal grid voltage (230 V) and a frequency range of 49,8 - 50,2 Hz (between 50,2 Hz and 51,5 Hz, the inverter has to reduce its power output and disconnect from the grid at 51,5 Hz).

Maximum Power Point Tracking (MPPT) in the case of PV systems: The inverter must optimize energy production by tracking the maximum power point (MPP) of the solar panels. This is typically achieved through an MPPT algorithm.

Grid Support Functions: The inverter may be required to provide grid support functions, such as:

(i) Reactive power compensation, i.e., the inverter may be required to provide reactive power to the grid to support voltage stability;
(ii) Frequency response, i.e., the inverter may be required to adjust its output power in response to changes in grid frequency, or (iii) Voltage ride-through, i.e., the inverter must be able to ride through voltage disturbances, such as voltage sags or swells.

Protection functions: Furthermore, the inverter must typically provide protection functions, such as:

(i) Overcurrent protection, i.e., the inverter must be able to detect and respond to overcurrent conditions.
(ii) Ground fault protection, i.e., the inverter must be able to detect and respond to ground faults; or
(iii) Islanding protection, i.e., the inverter must be able to detect and respond to islanding conditions, where the grid is disconnected, and the inverter continues to operate. For example, when an islanding condition is detected, the inverter must shut down or disconnect from the grid within a pre-determined time span, e.g., within 0.2 seconds in the case of the German public power grid.

The present disclosure relates generally to the particular requirement of islanding protection and specifically to islanding detection, i.e., the detection of the occurrence of an islanding condition.

Known islanding detection methods comprise passive methods and active methods. Passive methods use the information already available about the electrical grid. Such information may particularly be gathered at the network connection point (grid connection point) to which the inverter is directly or indirectly electrically coupled.

Active methods, to the contrary, introduce perturbations (also called stimuli) in the inverter output power to cause a reaction which is then measured and analyzed to detect an islanding condition, when present.

One of those active methods injects harmonics of the nominal grid power in the inverter output power as perturbations. Herein, the term "harmonic" refers to a sinusoidal wave with a frequency that is a positive integer multiple of the fundamental frequency of a periodic signal, in the present case the nominal frequency of the voltage of the power grid. The fundamental frequency is also called the 1st harmonic; the other harmonics are known as higher harmonics. For example, in case of a grid with a nominal frequency (first harmonic) at 60 Hz, the second harmonic has a frequency of 2 x 60 Hz = 120 Hz and the third harmonic has a frequency of 3 x 60 Hz = 180 Hz.

Power grids can generally be categorized based on their so-called "grid strength" as "strong" or "weak" grids (or "medium grids" when in between). Grid strength of an electric power grid can be quantitatively defined by several metrics, which are often used in combination to provide a comprehensive picture. Specifically, one or more of the following metrics may be used for that purpose:

(a) Short Circuit Ratio (SCR):

The ratio of the short-circuit current (Isc) to the full-load current (If) at a given point in the grid. SCR = Isc / If. A higher SCR indicates a stronger grid, as it can withstand larger faults without significant voltage drops. Typical values:

> Weak grid: SCR < 2,
> Medium grid: $2 \leq SCR \leq 5$
> Strong grid: SCR > 5.

(b) Grid Stiffness (GS):

A measure of the grid's ability to maintain voltage during disturbances.

$$GS = (\Delta P / \Delta V) * (Vnom / Vbase)$$

where:

> $\Delta P$ is the change in active power
> $\Delta V$ is the resulting change in voltage
> Vnom is the nominal voltage
> Vbase is the base voltage (usually 1 p.u.)

A higher GS indicates a stiffer grid, which is better equipped to handle disturbances. Typical values:

> Weak grid: GS < 1
> Medium grid: $1 \leq GS \leq 3$

Strong grid: GS > 3

(c) Voltage Stability Margin (VSM):

A measure of the grid's ability to maintain voltage stability during disturbances.

$$VSM = (Vmax - Vmin) / (Vnom - Vmin)$$

where:

> Vmax is the maximum voltage
> Vmin is the minimum voltage
> Vnom is the nominal voltage

A higher VSM indicates a more stable grid.
Typical values:

> Weak grid: VSM < 0.5
> Medium grid: $0.5 \leq VSM \leq 1.5$
> Strong grid: VSM > 1.5

(d) Grid Frequency Response (GFR):

A measure of the grid's ability to respond to frequency disturbances.

$$GFR = (\Delta f / \Delta P) * (Pnom / Pbase)$$

where:

> $\Delta f$ is the change in frequency
> $\Delta P$ is the change in active power
> Pnom is the nominal power
> Pbase is the base power (usually 1 p.u.)

A higher GFR indicates a more responsive grid.
Typical values:

> Weak grid: GFR < 0.5
> Medium grid: $0.5 \leq GFR \leq 1.5$
> Strong grid: GFR > 1.5

(e) Average Power Factor (APF):

A measure of the grid's ability to efficiently transmit power.

$$APF = (Pnom / Snom) * \cos(\varphi)$$

where:

> Pnom is the nominal active power
> Snom is the nominal apparent power
> $\varphi$ is the power factor angle

A higher APF indicates a more efficient grid.

Typical values:

Weak grid: APF < 0.8
Medium grid: $0.8 \leq$ APF $\leq 0.95$
Strong grid: APF > 0.95

(f) Impedance

A measure of the impedance of a power circuit to which the inverter is connected to supply electricity thereto, the impedance "as seen" by (i.e., measurable at) the inverter.

Typical values:
Weak grid: inductive impedance (inductance) is at least 2% of the base impedance $L_b$ defined as

$$L_b = (V_g)^2/P_{nom}$$

with $P_{nom} = I_{nom} * V_g$.
where $V_g$ ist the grid voltage, $I_{nom}$ is the nominal current and $P_{nom}$ the nominal power of the inverter.

Strong grid: inductive impedance (inductance) is less than 2% of the base impedance $L_b$.

These metrics can be used individually or in combination to quantify the grid strength of an electric power grid. However, it's essential to note that the specific values and thresholds may vary depending on the grid configuration, load characteristics, and operational conditions.

It is an object of the present invention to improve known active islanding detection methods. Specifically, it is an object to further optimize the reliability of the islanding detection, particularly in the case of an IBDER being connected to a weak power grid.

A solution to this problem is provided by the teaching of the independent claims. Various preferred embodiments of the present solution are provided by the teachings of the dependent claims.

Terms

Some terms used herein to define the present solution are explained below in more detail:
The term "sub-harmonic", as used herein, refers to a sinusoidal wave with a frequency that is the reciprocal of a positive integer multiple of the fundamental frequency of a periodic signal, in the present case the nominal frequency of the power grid. For example, in case of a grid with a nominal frequency (first harmonic) at 60 Hz, the second sub-harmonic has a frequency of 1/2 x 60 Hz = 30 Hz, and the third sub-harmonic has a frequency of 1/3 x 60 Hz =20 Hz.

The terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the present solution described herein are capable of operation in other sequences than described or illustrated herein.

Unless the context requires otherwise, where the term "comprising" or "including" or a variation thereof, such as "comprises" or "comprise" or "include", is used in the present description and claims, it does not exclude other elements or steps and are to be construed in an open, inclusive sense, that is, as "including but not limited to".

Where an indefinite or definite article is used when referring to a singular noun e.g., "a" or "an", "the", this includes a plural of that noun unless something else is specifically stated.

Appearances of the phrases "in some embodiments", "in one embodiment" or "in an embodiment", if any, in the description are not necessarily all referring to the same embodiment. Furthermore, the particular features, structures, or characteristics may be combined in any suitable manner in one or more embodiments.

Further, unless expressly stated to the contrary, "or" refers to an inclusive OR and not to an exclusive XOR. For example, a condition A or B is satisfied by any one of the following: A is true (or present) and B is false (or not present), A is false (or not present) and B is true (or present), and both A and B are true (or present).

By the terms "configured" or "arranged" to perform a particular function, (and respective variations thereof) as they may be used herein, it is to be understood that a relevant device or component is already in a configuration or setting in which it can perform the function, or it is at least adjustable - i.e., configurable - in such a way that it can perform the function after appropriate adjustment. In this context, the configuration can be carried out, for example, by means of a corresponding setting of parameters of a process sequence or of hardware (HW) or software (SW) or combined HW/SW-switches or the like for activating or deactivating functionalities or settings. In particular, the device may have a plurality of predetermined configurations or operating modes so that the configuration can be performed by means of a selection of one of these configurations or operating modes.

SUMMARY OF THE INVENTION

A first aspect of the present solution relates to an islanding detection method for an inverter-based distributed energy resource, IBDER, designed for connection to a power grid having a predetermined nominal harmonic grid voltage with a pre-determined nominal grid frequency. The method comprises:

(i) injecting a periodic perturbation in the output voltage or current of the IBDER;
(ii) measuring a signal representing a physical quantity occurring at the IBDER as a result of the perturbation;

(iii) analyzing the signal to derive at least one physical quantity from it; and

(iv) comparing the or each physical quantity to a respective corresponding predetermined reference quantity related to a non-islanding condition of the IBDER to determine whether an islanding condition exists for the IBDER.

The periodic perturbation comprises at least one sub-harmonic perturbation, and deriving the at least one physical quantity from the signal comprises recovering a sub-harmonic component that is represented by the signal as a result of the sub-harmonic perturbation.

In the following, preferred embodiments of the method of the first aspect are described, which can be arbitrarily combined with each other or with other aspects of the present solution, unless such combination is explicitly excluded or technically impossible.

According to some embodiments, the method further comprises determining a pseudo-apparent power

(i) based on the injected current of the perturbation and an actual detected grid voltage of the grid or
(ii) based on the injected voltage of the perturbation and an actual detected grid current of the grid; and

determining the or at least one physical quantity based on the determined pseudo-apparent power.

Specifically, the pseudo-apparent power may be determined by multiplying in the case (i) the injected current of the perturbation and an actual detected grid voltage of the grid, or in the case (ii) the injected voltage of the perturbation and an actual detected grid current of the grid. The resulting pseudo-apparent power will thus have at least a component that oscillates at twice the frequency of the injected perturbation (stimulus) and will be used as a basis for determining, whether an islanding condition is present. Relative to conventional island detection methods based on a measurement of voltage or impedance, using the pseudo-apparent power allows for obtaining results at twice the rate and thus enables faster detection times which in turn enables faster reaction times for disconnecting the inverter from the grid or shutting the inverter down. Furthermore, typically the apparent power will provide a rather low noise level and thus good signal-to-noise ratio, which is usually higher than that of the actual detected grid voltage and thus makes the pseudo-apparent power a particulary suitable variable for determining a potential islandind condition based thereon.

According to some related embodiments, the physical quantity is based on one of an amplitude or a phase of the determined pseudo-apparent power. Both can be easily and instantly measured with high precision and thus provide a reliable basis for detecting a potential islanding condition based on the comparison of the respective physical quantity with the corresponding reference quantity.

According to some related embodiments, a Goertzel algorithm is used to for analyzing the signal an advantage of using a Goertzel algorithm is that can be implemented with less memory and fewer operations for each iteration than a conventional approach using a conventional Discrete Fourrier Transformation (DFT) instead.

According to some related embodiments, a simplified Goertzel algorithm is used to for analyzing the signal, the simplified Goertzel algorithm being based on the following z-domain transfer function:

$$H(z) = \frac{e^{j2\pi m/N} - z^{-1}}{1 - 2\cos\left(\frac{2\pi m}{N}\right) z^{-1} + z^{-2}}$$

Where the 'm' variable is the index of the single Discrete Fourier Transform (DFT) bin sample being computed where $m = 0,1,2,...,N\text{-}1$, $N$ is the DFT size, and the $X(m)$ output is the desired mth-bin DFT sample.

The simplified Goertzel algorithm eliminates certain, cumbersome processing steps of the traditional Goertzel algorithm and is computationally simpler and more efficient. Specifically, shifting data samples downward through two delay elements and apply a zero-valued input sample to the algorithm's network's input and repeating computations of a first stage of the algorithm can be avoided. A thorough description of the simplified Goertzel algorithm with ("H" = "$H_2$") can be found in [1].

Specifically, the Goertzel or simplified Goertzel algorithm may be used to recover a real part and an imaginary part of the signal.

According to some embodiments, the periodic perturbation comprises at least one sub-harmonic perturbation and at least one harmonic perturbation This can help to increase the detection reliability for an islanding condition, particularly for different grid strengths, such as in different grids or in grids with a grid strength that varies significantly over time. Specifically, while sub-harmonic perturbations are particularly suitable for detecting an islanding condition in weak grids, harmonic perturbations are particularly suitable for detecting an islanding condition in strong grids.

According to some embodiments, measuring the signal comprises using at least one digital filter to recover the sub-harmonic component (and, optionally, where relevant, also one or more harmonic component(s)) of the grid voltage or grid current). Specifically, the one or more digital filters, such as a notch filter, can be applied to the real signal (voltage or current) at the fundamental frequency. As the perturbation is typically small compared to the fundamental component, and the fundamental component interferes with the detection when using either harmonic or sub-harmonic perturbations, such filtering is helpful to increase the reliabiltiy and accuracy of properly recovering the sub-harmonic component(s) and consequently of the quality of the determination of a potential islanding condition as a whole.

According to some embodiments, the method further comprises initiating a transition of the IBDER into a safe state, when an islanding condition is determined as a result of the one or more comparisons.

Thus, the method can then not only detect an islanding condition but can in addition also act on it to transfer the system into a safe state, e.g. by causing a disconnection of the inverter from the grid or by causing it to shut down. Accordingly, the method is thus extended from a mere islanding detection method to an anti-islanding method.

According to one embodiment it is proposed, the method is applied to an inverter being connected to a power grid having a weak system strength, e.g. as defined above according to metric (f) based on impedance.

The method is particularly suitable to detect islanding conditions even in such situations, where conventional islanding detection methods, including active detection methods being based solely on harmonics, become less reliable or even fail.

A second aspect of the present solution relates to Inverter for a distributed energy resource, IBDER, designed for connection to a power grid having a predetermined nominal harmonic grid voltage with a predetermined nominal grid frequency, the inverter comprising:

  a voltage or current generator configured to injecting a periodic perturbation in the output voltage or current, respectively of the IBDER, wherein the periodic perturbation comprises at least one sub-harmonic perturbation;
  a measurement device for measuring a signal representing a physical quantity occurring at the IBDER as a result of the perturbation;
  a controlling device being configured to perform the islanding detection method of any one of the preceding claims.

All explanations given with regard to the Islanding detection method are fully applicable to the inverter as well.

BRIEF DESCRIPTION OF THE DRAWINGS

Further advantages, features, and applications of the present solution are provided in the following detailed description and the appended figures, wherein:

  **Fig. 1** shows an exemplary simplified circuit for analysis of a potential islanding condition,

  **Fig. 2** is a block diagram illustrating the evaluation unit from Fig. 1 in more detail,

  **Fig. 3** is a chart illustrating an exemplary Impedance amplitude for grid "ON/OFF" in case of a "strong grid" condition,

  **Fig. 4** is a chart illustrating an exemplary Impedance amplitude for grid "ON/OFF" in case of a "weak grid" condition,

  **Fig. 5** is a chart illustrating an exemplary pseudo apparent power for grids of different strengths in the case of harmonic injection,

  **Fig. 6** is a chart illustrating an exemplary pseudo apparent power for grids of different strengths in the case of sub-harmonic injection,

  **Fig. 7** is a chart illustrating a detected relative angle for the pseudo-apparent power using harmonic injection, and

  **Fig. 8** is a chart illustrating a detected relative angle for the pseudo-apparent power using sub-harmonic injection.

In the figures, identical reference signs are used for the same or mutually corresponding elements of the devices described herein.

DETAILED DESCRIPTION OF EMBODIMENTS

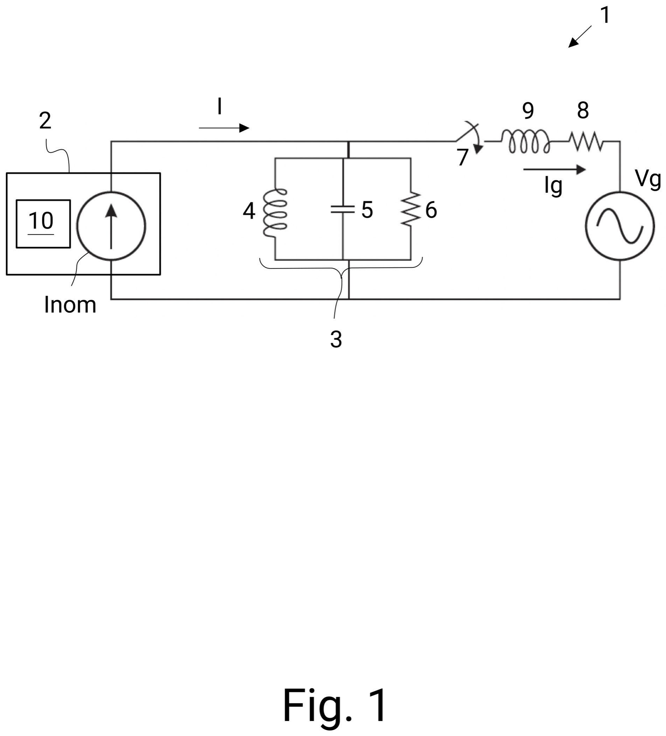

**Fig. 1** shows an exemplary simplified circuit 1 for analysis of a potential islanding condition. The circuit 1 comprises an IBDER, such as having an inverter 2 that is coupled to a load 3 which can be represented by an equivalent circuit 1 diagram comprising a parallel connection of a load impedance 4, a load capacitance 5 and a load ohmic resistance 6. Specifically, the load 3 may be a local grid, e.g., a local power loop in a building, a manufacturing site, a neighborhood or a particular street, the local grid being supplied with electricity from the power grid and, at least at times, from the IBDER. The load 3 is coupled through a switch 7 to a power grid having an AC grid voltage $V_g$. The power grid itself can be described as an equivalent grid circuit having a grid ohmic resistance 8 and a grid inductance 9 which together form a grid impedance.

An impedance can generally be expressed as a complex quantity, i.e., as having a real and an imaginary part. While the real part expresses an ohmic component of the impedance, the imaginary part expresses an inductive part (inductance) of the impedance. The grid impedance can be used to define or determine whether a given grid is classified as "strong" or "weak".

When the switch 7 is closed, the inverter 2 is electrically connected to the grid so that an inverter current I may occur with a nominal current value $I_{nom}$. Figure 1 illustrates the situation where the inverter 2 converts electricity being generated by a PV system (e.g., a PV system comprising solar panels) and/or provided by one or more energy storage systems (e.g. batteries) so as to supply the electricity as a grid current Ig into the power grid.

The inverter 2 is adapted to inject a periodic perturbation in its output voltage or inverter current I and to measure a signal representing a resulting impedance of the circuit 1, as seen by the inverter 2. The resulting impedance is a function of the load impedance 4 and (when the switch 7 is closed) also of the grid impedance which typically comprises a grid ohmic resistance 8 and a grid inductance 9. The inverter 2 comprises an evaluation unit 10 which is configured to analyze the measured signal to determine, based on this analysis, whether an islanding condition, i.e., a condition, where the inverter 2 and the load 3 are disconnected from the power grid, is present. As discussed in more detail above, when an islanding condition is determined, a safety risk may occur when the inverter 2 continues or starts to provide energy to the load 3, although the load 3 is disconnected from the grid.

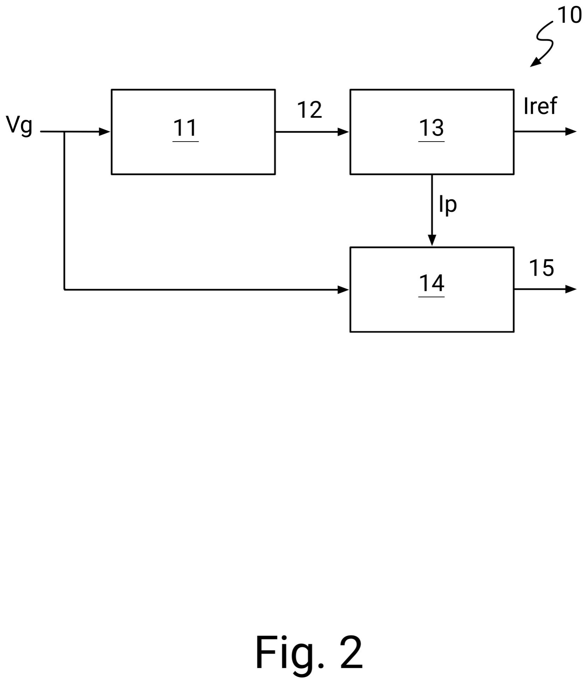

**Fig. 2** illustrates the evaluation unit 10 from Fig. 1 in more detail. The evaluation unit 10 comprises a phase-locked loop (PLL 11) circuit which takes the grid voltage $V_g$ as an input, synchronizeses thereto, and provides a PLL-angle, i.e., a phase 12 of the grid voltage $V_g$, as an output.

The evaluation unit 10 further comprises a reference current source 13 which is configured to generate a harmonic reference current $I_{ref}$ corresponding to the first harmonic and to add the perturbation comprising at least one sub-harmonic component so as to further generate a perturbed reference current $I_p$. Thus, Iref comprises the desired fundamental component (current/voltage) with the added perturbation. The perturbation may for example comprise a current or a perturbation phase signal and includes at least one sub-harmonic component and optionally additionally one or more harmonic components of the fundamental frequency of the grid voltage $V_g$, i.e., its first harmonic.

Moreover, the evaluation unit 10 comprises an islanding detection function or unit 14 being configured to receive and measure the perturbed reference current $I_p$ and the grid voltage $V_g$ as inputs, to compute the pseudo-apparent power from these inputs, and to determine based on the pseudo-apparent power, particularly based on the perturbation reflected therein, whether an islanding condition is present and to output a corresponding detection result 15 representing the result of the determination. The detection result 15 may be a simply binary value (e.g., 0/1 or yes/no or on/off) or it may be one or more discrete or continuous parameters which may carry additional information beyond the mere information whether an islanding condition is present. For example, such parameter(s) may carry information characterizing the measured grid voltage $V_g$ and/or perturbed reference current $I_p$.

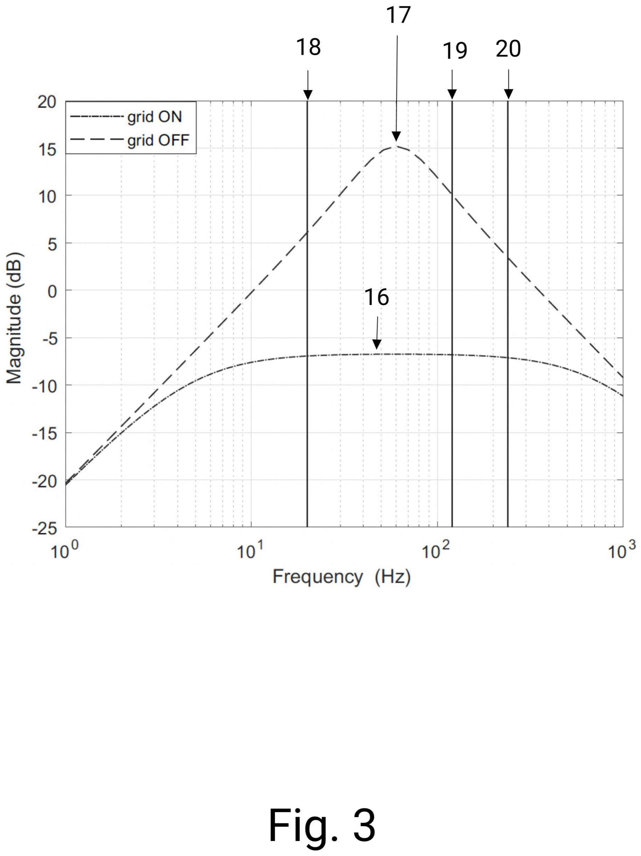

**Fig. 3** is a chart illustrating an exemplary amplitude (in dB) of the equivalent impedance, as "seen" by the inverter 2, for grid "ON/OFF" in case of a "strong grid" condition, as a function of the frequency (as a variable) of the periodic perturbation injected by the PLL 11 into the reference current $I_{ref}$ which will produce a perturbation component on the grid voltage $V_g$. The term "equivalent impedance" refers to the magnitude of the impedance, i.e. to the square-root of the sum of the squares of the real part and the imaginary part.

In the present example, a strong grid is characterized in that the equivalent impedance (which is the effective impedance arising from the combination of the grid impedance and the load impedance 4) is lower than 2 percent of the base impedance that is defined as:

$$(V_g)^2/P_{nom}$$

with $P_{nom} = I_{nom} * V_g$.

When the grid is in an ON-state, which means that the switch 7 is closed, the resulting equivalent impedance, when measured across a range of different perturbation frequencies, shows a relatively flat plateau 16 without a pronounced maximum.

When the grid is in an OFF-state, however, which means that the switch 7 is in an open state and thus the inverter 2 is disconnected from the power grid and only the local load 3 remains connected, the curve changes significantly and generally higher impedance values showing a distinct peak 17 appear. The vertical bold lines pertain to three different specific frequencies, namely a sub-harmonic frequency 18 of the grid voltage $V_g$, its second harmonic 19 and its fourth harmonic 20.

It can be readily observed that at the injected harmonic frequencies (either second harmonic 19 or fourth harmonic 20 or both), there is a clear difference between the respective equivalent impedance in the 'ON' and 'OFF' states, which in turn result in voltage values that are easily differentiated. Once the grid opens, positive feedback may be employed to further increase this difference and thus even further enhance the reliability of the islanding detection.

As Fig. 3 shows, in the case of a strong grid, both, the sub-harmonic 18 and the harmonics 19 and/or 20, or both harmonic and sub-harmonic frequencies, may be reliably used for the determination of an islanding condition.

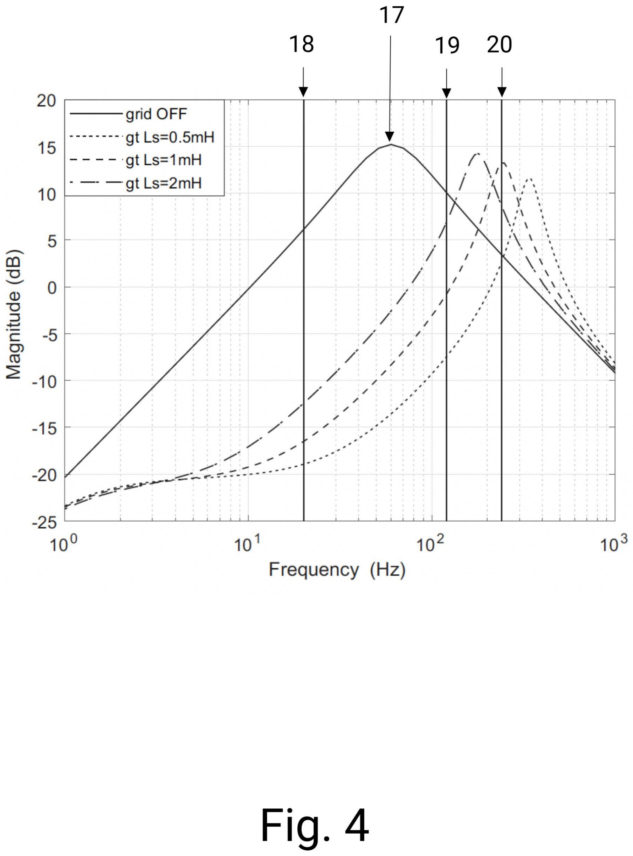

Turning now to **Fig. 4** which is a chart illustrating an exemplary amplitude (in dB) of the equivalent impedance for grid "ON/OFF" in case of a "weak grid" condition, as a function of the frequency (as a variable) of the periodic perturbation injected by the PLL 11 into the reference current $I_{ref}$. While the OFF-state obviously corresponds to that of Fig. 3, in the ON-state, the difference in grid strength is reflected in rather different shapes of the impedance curves, as shown for three different values of the grid inductance 9 (denoted as "gt Ls" in the chart). Unlike in Fig. 3, at the two harmonics 19 and 20, the differences between the impedance value for the OFF-state on the one hand and the respective ON-state, on the other hand, are rather low, which makes a reliable determination of an OFF-State, i.e., of an island condition, rather difficult or even impossible. At the sub-harmonic 18, however, the difference of the impedance values between the two states remains very substantial and can thus serve as a basis for reliable detection of an island condition, even in the present case of a weak grid.

In both cases, the voltage perturbation arising in the grid voltage $V_g$ because of the injected perturbation current $I_p$ can be recovered using digital filters. This recovered voltage perturbation is multiplied to the injected perturbation component in the perturbed reference current $I_p$, thus producing a pseudo apparent power component which allows the detection of the islanding operation in both strong and weak grids. The pseudo apparent power component may particularly be analyzed using a modified Goertzel algorithm to recover the real and imaginary parts of the determined pseudo apparent power component signal which oscillates at twice the frequency of the injected perturbation 10.

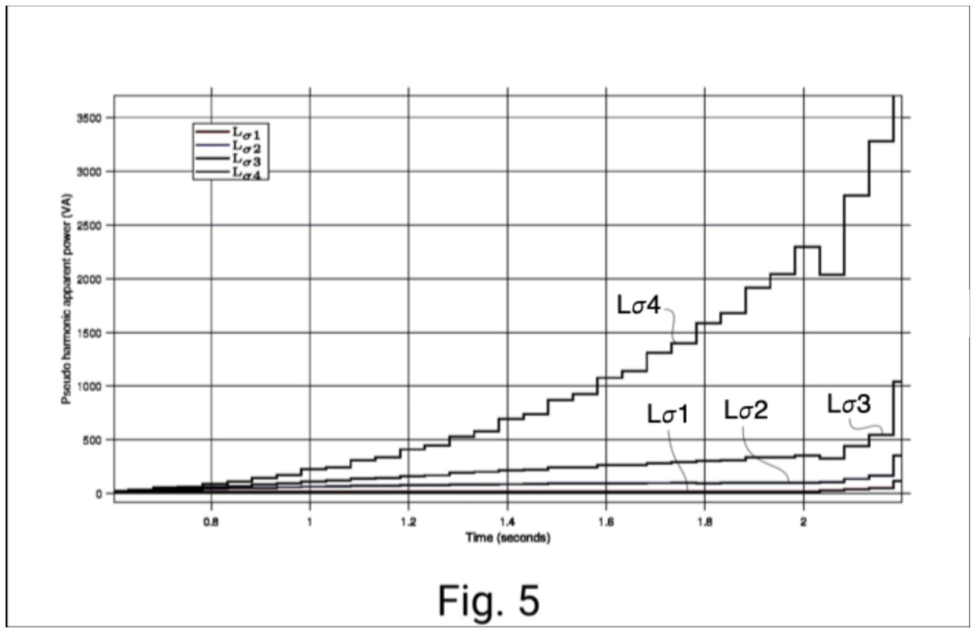

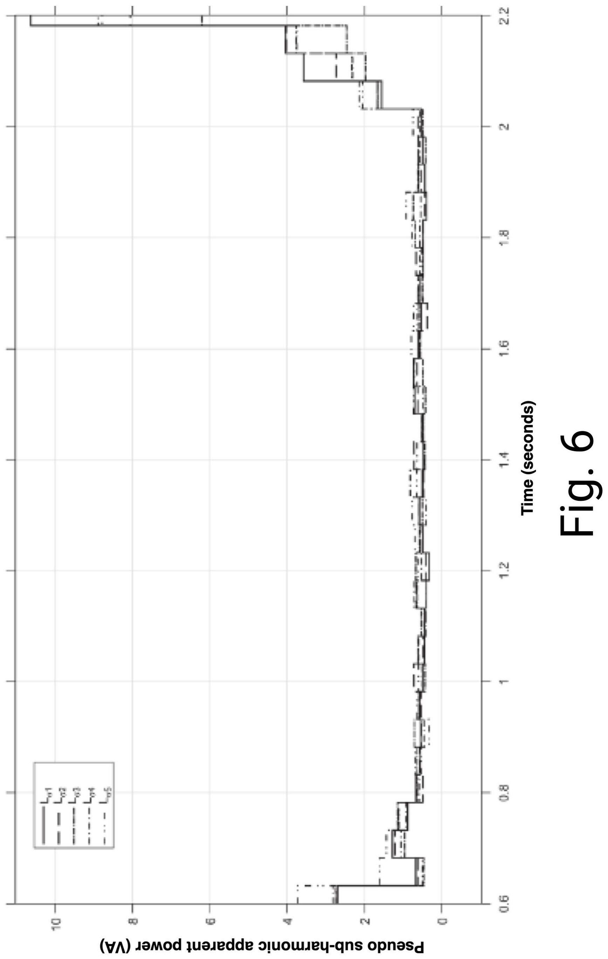

This is now further explained with reference to **Figs. 5 and 6** which are charts that each illustrate an exemplary pseudo apparent power for grids of different strengths as a function of time in the case of harmonic injection **(Fig. 5)** and sub-harmonic injection **(Fig. 6).** In each of these charts, the grid opens at t = 2s (this corresponds to an opening of switch 7 in Fig. 1) and corresponding curves for various grid strengths (expressed as values of the grid inductance 9 (L$\sigma$) are shown.

In **Fig. 5,** which relates for reference to a mere harmonic injection, four curves are shown which relate to the following values for L$\sigma$: (1) 50 $\mu$H, (2) 500 $\mu$H, (3) 600 $\mu$H, (4) 700 $\mu$H.

In **Fig. 6,** which relates for reference to a sub-harmonic 14 injection, five curves are shown which relate to the following values for L$\sigma$: (1) 50 $\mu$H, (2) 500 $\mu$H, (3) 600 $\mu$H, (4) 700 $\mu$H, (5) 2 mH.

As one can easily see from Figs. 5 and 6, for both strong and weak grids, the detected sub-harmonic magnitude will increase when the grid is not present (islanding condition, OFF-state, after t = 2s). Only in strong grids (L$\sigma$1), the detected magnitude will consistently increase when using harmonic injection. Thus, for strong grids, the use of either a harmonic or a sub-harmonic injection will render consistent results (note the different scales for the magnitude in Fig. 6 vs. Fig. 5). However, for weak grids (L$\sigma$2,..., L$\sigma$5), only the sub-harmonic injection renders consistent results when the grid is not present.

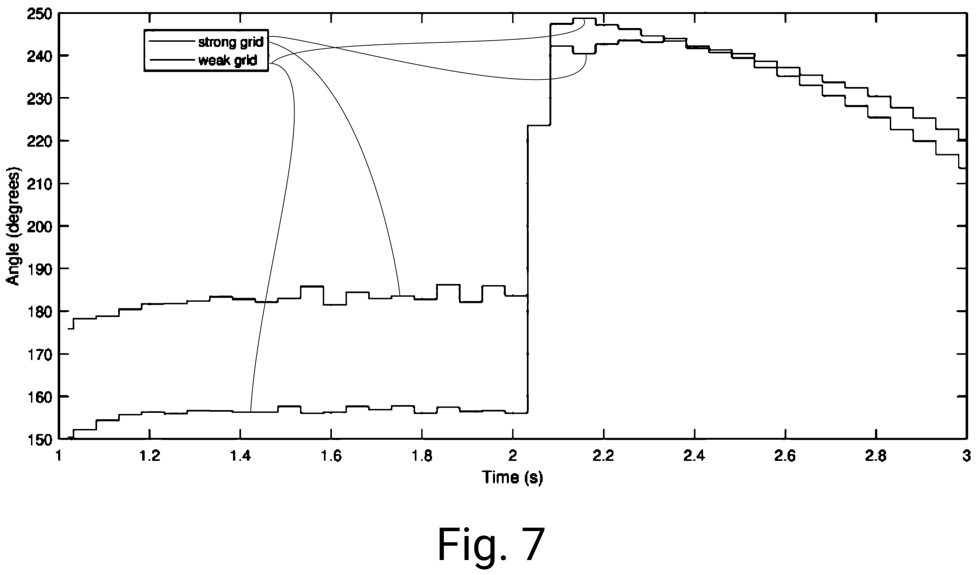

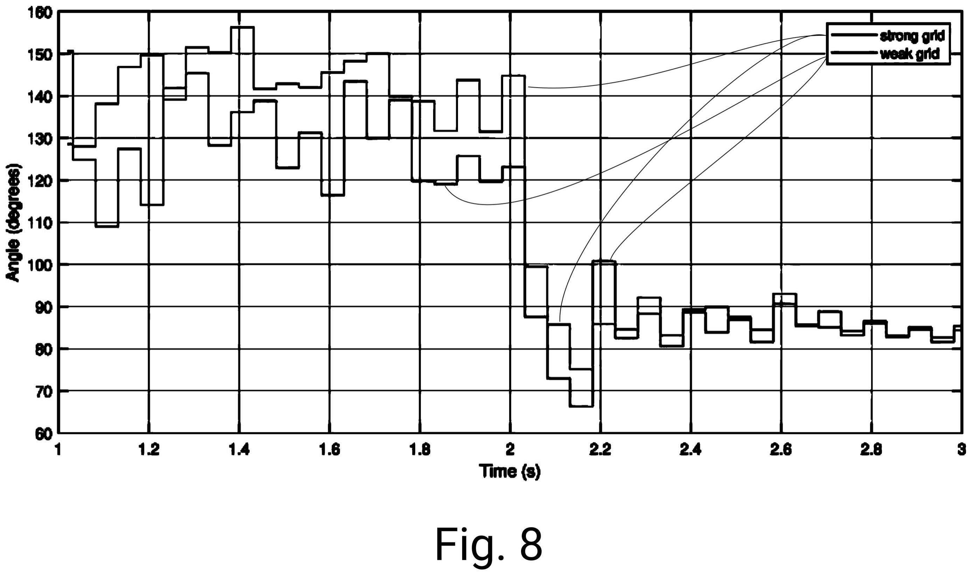

**Figures 7 and 8** show the relative phase 12 (angle) of the apparent power for harmonic injection (Fig. 7) and sub-harmonic injection (Fig. 8), respectively. In the case of sub-harmonic 14 injection, there is little L$\sigma$1 difference between the strong and weak grid condition, while for harmonic injection there is a clear difference between the strong and weak grid condition during grid-tied operation. However, in both cases, the islanding condition (OFF-state) which is entered at t = 2 s can be safely detected based on a steplike change of the phase 12 in either case and for both strong and weak grids.

While above at least one exemplary embodiment of the present solution has been described, it has to be noted that a significant number of variations thereto exists. Furthermore, it is appreciated that the described exemplary embodiments only illustrate non-limiting examples of how the present solution can be implemented and that it is not intended to limit the scope, the application, or the configuration of the herein-described apparatuses and methods. Rather, the preceding description will provide the person skilled in the art with constructions for implementing at least one exemplary embodiment of the present solution, wherein it must be understood that various changes of functionality and the arrangement of the elements of the exemplary embodiment can be made, without deviating from the subject-matter defined by the appended claims.

LIST OF REFERENCE NUMBERS

[0081]

| | |
|---|---|
| 1 | circuit |
| 2 | inverter |
| 3 | load |
| 4 | load impedance |
| 5 | load capacitance |
| 6 | load ohmic resistance |
| 7 | switch |
| 8 | grid ohmic resistance |
| 9 | grid inductance |
| 10 | evaluation unit |
| 11 | PLL |
| 12 | phase |
| 13 | reference current source |
| 14 | islanding detection function |
| 15 | detection result |
| 16 | plateau |
| 17 | peak |
| 18 | sub-harmonic (frequency) |
| 19 | second harmonic |
| 20 | fourth harmonic |

| | |
|---|---|
| I | inverter current |
| $I_g$ | grid current |
| $I_{nom}$ | nominal current value |
| $I_p$ | perturbed reference current |
| $I_{ref}$ | reference current |
| $V_g$ | grid voltage |

**Reference**

[1] Lyons, Richard (Rick), "A Simpler Goertzel Algorithm", Internet-Blog, available at https://www.dsprelated.com/showarticle/1386.php, February, 2021

**Claims**

**1.** Islanding detection method for an inverter-based distributed energy resource, IBDER, designed for connection to a power grid having a predetermined nominal harmonic grid voltage with a pre-determined nominal grid frequency, the method comprising:

injecting a periodic perturbation in the output voltage or current of the IBDER;
measuring a signal representing a physical quantity occurring at the IBDER as a result of the perturbation;
analyzing the signal to derive at least one physical quantity from it; and
comparing the or each physical quantity to a respective corresponding predetermined reference quantity related to a non-islanding condition of the IBDER to determine whether an islanding condition exists for the IBDER;
wherein the periodic perturbation comprises at least one sub-harmonic perturbation and deriving the at least one physical quantity from the signal comprises recovering a sub-harmonic component that is represented by the signal as a result of the sub-harmonic perturbation.

**2.** Islanding detection method according to claim 1, further comprising determining a pseudo-apparent power

based on the injected current of the perturbation and an actual detected grid voltage of the grid or based on the injected voltage of the perturbation and an actual detected grid current of the grid; and
determining the or at least one of said physical quantities based on the determined pseudo-apparent power.

**3.** Islanding detection method according to claim 2, wherein the physical quantity is based on one of an amplitude or a phase of the determined pseudo-apparent power.

**4.** Islanding detection method according to any one of the preceding claims, wherein a Goertzel algorithm is used to for analyzing the signal.

**5.** Islanding detection method according to claim 4, wherein a simplified Goertzel algorithm is used for analyzing the signal, the simplified Goertzel algorithm being based on the following z-domain transfer function:

$$H(z) = \frac{e^{j2\pi m/N} - z^{-1}}{1 - 2\cos\left(\frac{2\pi m}{N}\right)z^{-1} + z^{-2}}$$

**6.** Islanding detection method according to claim 4 or 5, wherein the Goertzel algorithm is used to recover a real part and an imaginary part of the signal.

**7.** Islanding detection method according to any one of the preceding claims, wherein the periodic perturbation comprises at least one sub-harmonic perturbation and at least one harmonic perturbation.

**8.** Islanding detection method according to any one of the preceding claims, wherein measuring the signal comprises using at least one digital filter to recover the sub-harmonic component of the grid voltage or grid current.

**9.** Islanding detection method according to one of the preceding claims, further comprising initiating a transition of the IBDER into a safe state, when an islanding condition is determined as a result of the one or more comparisons.

**10.** Islanding detection method according to one of the preceding claims, wherein the method is applied to an inverter being connected to a power grid having an equivalent inductive impedance of at least 2% of the base impedance $L_b$ defined as

$$L_b = (V_g)^2/P_{nom}$$

with $P_{nom} = I_{nom} * V_g$.
where $V_g$ ist the grid voltage, $I_{nom}$ is the nominal current and $P_{nom}$ the nominal power of the inverter.

**11.** Inverter for a distributed energy resource, IBDER, designed for connection to a power grid having a predetermined nominal harmonic grid voltage with a predetermined nominal grid frequency, the inverter comprising:

a voltage or current generator configured to injecting a periodic perturbation in the output voltage or current, respectively of the IBDER, wherein the periodic perturbation comprises at least one sub-harmonic perturbation;
a measurement device for measuring a signal representing a physical quantity occurring at the IBDER as a result of the perturbation;
a controlling device being configured to perform the islanding detection method of any one of the preceding claims.

Fig. 1

Fig. 2

Fig. 3

Fig. 4

Fig. 5

Fig. 6

Fig. 7

EP 4 787 658 A1

Fig. 8

EP 4 787 658 A1

# EUROPEAN SEARCH REPORT

Application Number

EP 26 15 5680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TEDDE MARCO ET AL: "Anti-Islanding for Three-Phase One-Cycle Control Grid Tied Inverter", IEEE TRANSACTIONS ON POWER ELECTRONICS INSTITUTE OF ELECTRICAL AND ELECTRONICS ENGINEERS, USA, vol. 29, no. 7, 1 July 2014 (2014-07-01), pages 3330-3345, XP011540342, ISSN: 0885-8993, DOI: 10.1109/TPEL.2013.2278792 [retrieved on 2014-02-17] | 1-4,6-11 | INV. H02J3/388  ADD. H02J3/38 |
| Y | * abstract * * page 3330 - page 3342 * * page 3344 * | 5 | |
| X | CN 106 505 840 A (YUNNAN POWER GRID CO LTD) 15 March 2017 (2017-03-15) | 1-3,7-11 | |
| Y | * paragraph [0005] - paragraph [0027] * * paragraph [0038] - paragraph [0071]; claims 1-3; figures 1-7 * | 4-6 | |
| Y,D | Lyons Richard: "A Simpler Goertzel Algorithm", , 4 February 2021 (2021-02-04), pages 1-4, XP093407482, Retrieved from the Internet: URL:https://www.dsprelated.com/showarticle /1386.php [retrieved on 2026-06-16] * page 2 * | 4-6 | TECHNICAL FIELDS SEARCHED (IPC)  H02J |

The present search report has been drawn up for all claims

| Place of search | Date of completion of the search | Examiner |
|---|---|---|
| Munich | 17 June 2026 | Mäki-Mantila, Harri |

EPO FORM 1503 03.82 (P04C01)

## ANNEX TO THE EUROPEAN SEARCH REPORT
## ON EUROPEAN PATENT APPLICATION NO.

EP 26 15 5680

This annex lists the patent family members relating to the patent documents cited in  the above-mentioned European search report.
The members are as contained in the European Patent Office EDP file on
The European Patent Office is in no way liable for these particulars which are merely given for the purpose of information.

17-06-2026

| Patent document cited in search report | Publication date | Patent family member(s) | Publication date |
|---|---|---|---|
| CN 106505840 A | 15-03-2017 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LYONS, RICHARD (RICK**. *A Simpler Goertzel Algorithm*, February 2021, https://www.dsprelated.com/showarticle/1386.php